Europäisches Patentamt

European Patent Office

Office européen des brevets

(19)

(11) Veröffentlichungsnummer: **0 198 248 B1**

(12) # EUROPÄISCHE PATENTSCHRIFT

(45) Veröffentlichungstag der Patentschrift: **11.09.91**

(51) Int. Cl.5: **H02P 7/00**, G05B 19/04

(21) Anmeldenummer: **86103588.9**

(22) Anmeldetag: **17.03.86**

(54) Steuereinheit für einen von einem Frequenzumrichter gespeisten Drehstrommotorantrieb.

(30) Priorität: **17.04.85 DE 3513775**

(43) Veröffentlichungstag der Anmeldung:
**22.10.86 Patentblatt 86/43**

(45) Bekanntmachung des Hinweises auf die
Patenterteilung:
**11.09.91 Patentblatt 91/37**

(84) Benannte Vertragsstaaten:
**AT CH FR GB LI**

(56) Entgegenhaltungen:
**EP-A- 0 056 437**  **EP-A- 0 077 178**
**US-A- 4 145 740**  **US-A- 4 418 398**
**US-A- 4 419 615**  **US-A- 4 427 934**

**ELEKTRIE, Band 35, Nr. 10, 1981, Seiten
508-512, Berlin, DD; R. SCHÖNFELD:
"Regelung elektrischer Antriebe mit Mikrorechnerreglern"**

(73) Patentinhaber: **Arnold Müller GmbH & Co. KG
Klosterstrasse 48
W-7312 Kirchheim/Teck(DE)**

(72) Erfinder: **Vogt, Günther, Dr. Dipl.-Ing.
Habichtweg 18
W-7312 Kirchheim/Teck(DE)**

(74) Vertreter: **Kratzsch, Volkhard, Dipl.-Ing.
Mülbergerstrasse 65
W-7300 Esslingen(DE)**

EP 0 198 248 B1

**Beschreibung**

Die Erfindung bezieht sich auf eine Antriebseinrichtung mit einem Drehstrommotor und mit einer Steuereinheit der im Oberbegriff des Anspruchs 1 genannten Art.

Es ist eine Antriebseinrichtung dieser Art bekannt (EP-A-0056 437), bei der die Steuereinheit und das in deren Mikrorechner gespeicherte Ablaufprogramm für den besonderen Einsatz des Motors als Antrieb der Waschtrommel einer Waschmaschine und für den Waschmaschinenbetrieb ausgebildet sind. Die komplette Antriebseinrichtung ist für diesen speziellen Anwendungsfall ausgerichtet, wobei im Ablaufprogramm eine Drehzahlregelung gespeichert ist. Die Steuereinheit ist damit in der Lage, den Antriebsmotor entsprechend der gewünschten Drehzahl zu führen. Im Rahmen der Auslegung der Steuereinheit kann zwar eine Änderung der Arbeitsprogrammwahl vorgenommen werden, wobei jedoch die Antriebseinrichtung nach wie vor auf den speziellen Anwendungsfall des Antriebs einer Waschmaschinentrommel oder eines entsprechenden Haushaltsgeräts eingeschränkt bleibt. Aus der US-A-44 19 615 ist eine Antriebseinrichtung mit einem Mikrocomputer zur Pulsbreitenmodulation für verschiedene Induktionsmotoren bekannt. In der US-A-44 27 934 ist eine Steuereinheit mit einem Drehstrommotor und einem Mikrocomputer beschrieben, mittels dessen eine Drehzahlregelung des Drehstrommotors in Form einer Synchronmaschine geschieht. Auch bei den Antriebseinrichtungen dieser beiden zuletzt genannten Schriften ist die Steuereinheit so beschaffen, daß die Antriebseinrichtung für einen bestimmten Anwendungsfall, und nur für diesen, ausgelegt ist. Soll die Antriebseinrichtung für einen anderen Antriebszweck eingesetzt werden, ist dies nicht möglich. Es muß vielmehr dann für diesen anderen Anwendungsfall eine speziell darauf ausgerichtete Antriebseinrichtung neu konzipiert werden. Dies bedeutet in der Praxis, daß für verschiedene Bedarfsfälle, bei denen Antriebseinrichtungen benötigt werden, jeweils speziell darauf ausgerichtete Antriebseinrichtungen bereitzustellen sind, bei denen die jeweilige Steuereinheit unterschiedlich aufgebaut ist und entsprechend unterschiedlich arbeitet.

Der Erfindung liegt die Aufgabe zugrunde, eine Antriebseinrichtung der im Oberbegriff des Anspruchs 1 genannten Art zu schaffen, die für die verschiedensten Anwendungsfälle geeignet ist und vom Benutzer dann vor Ort entsprechend dem jeweiligen Einsatzfall auf die Antriebsbedürfnisse konfiguriert werden kann.

Die Aufgabe ist bei einer Antriebseinrichtung der im Oberbegriff des Anspruchs 1 genannten Art gemäß der Erfindung durch die Merkmale im Kennzeichnungsteil des Anspruchs 1 gelöst. Die Antriebseinrichtung ist hinsichtlich der Steuereinheit ohne Änderung letzterer somit anpaßbar an die verschiedensten gewünschten Antriebsaufgaben und Einsatzzwecke, weil die Antriebseinrichtung eine Multifunktionsausrüstung hat. Die erfindungsgemäße Antriebseinrichtung enthält somit eine Steuereinheit, die ohne nennenswerte Änderung in der physischen Gestaltung, sogenannte Hardware, auskommt und in der Lage ist, verschiedenste praxisgegebene Aufgabenstellungen, wie beispielsweise eine Lageregelung, eine Streckensteuerung, eine Kopplungsfunktion sowie Synchronisationsfunktionen und Komplettfunktionen in Insellösung zu erfüllen. Das Ablaufprogramm enthält alle für die verschiedenen vorkommenden Antriebskonfigurationen und Antriebsfunktionen notwendigen Abläufe, so daß in vorteilhafter Weise vom Anwender selbst vor Ort entsprechend der jeweiligen Antriebsaufgabe, für die die Antriebseinrichtung eingesetzt werden soll, die eigentliche Konfiguration auf diese Antriebsaufgabe vorgenommen werden kann. Dazu werden die entsprechenden Teile des Ablaufprogramms von außen her aufgerufen und so aktiviert, daß die Steuereinheit den Drehstrommotor entsprechend dem gewünschten Einsatz der Antriebseinrichtung betreibt. So lassen sich aufgrund des im Mikrorechner gespeicherten Ablaufprogrammes beispielsweise folgende Regelungen besonders vorteilhaft durch Aufruf von außen in Ausrichtung auf den jeweiligen gewünschten Einsatzzweck der Antriebseinrichtung konfigurieren:

a) Eine Drehzahlregelung mit und ohne Meßwertgeber,

b) eine Rotationswinkelregelung oder allgemeine Positionsregelung mit digitalen Meßsystemen,

c) eine Sollwerterzeugung für Positionierzyklen oder für zeitabhängige Drehzahlprofile,

d) eine Steuerung von Maschinenfunktionen über digitale Ein-/Ausgänge,

e) eine Handradsteuerung mittels Wege darstellenden Impulsketten, die über einen der Impulsgebereingänge eingespeist werden, sowie

f) eine Schrittmotorsteuerung unter Verwendung von Sollwerten, die über einen der Impulsgebereingänge geführt sind.

Vorteilhafte Ausgestaltungen und Weiterbildungen des Gegenstandes gemäß Anspruch 1 enthalten die Unteransprüche. Besonders vorteilhaft sind die Merkmale in Anspruch 5. Dabei wird mit dem kombinierten EPROM + EEPROM-Speicherteil die von außen erfolgende Aufruf-Konfiguration abgespeichert und es wird, wenn eine bereits einmal abgespeicherte Kombination nicht mehr benötigt wird, weil die Antriebseinrichtung für eine andere Aufgabe eingesetzt werden soll, durch entsprechenden geänderten Aufruf die im elektrisch löschbaren Programm-Lesespeicher enthaltene Information durch die neue Information überschrieben (Parametrisierung). Damit ist dann nur die neue Information für den Ablauf des Steuerprogramms maßgebend.

Aufbau, Arbeitsweise und weitere Anwendungen der erfindungsgemäß gestalteten Antriebseinrichtung werden anhand des im Zusammenhang mit der Zeichnung dargestellten Ausführungsbeispieles nachfolgend näher erläutert. Es zeigen:

Fig. 1    schematisch eine Antriebseinrichtung mit einem pulsgetriebenen Frequenzumrichter und einem Asynchronmotor sowie eine Reihe unterschiedlicher Eingänge und Ausgänge einer Steuereinheit, und

Fig. 2    schematisch einen Teil der in Fig. 1 dargestellten Steuereinheit, darstellend im wesentlichen den Mikroprozessor und die wesentlichen Speicherteile sowie einen digitalen Eingabeteil des Mikrorechners.

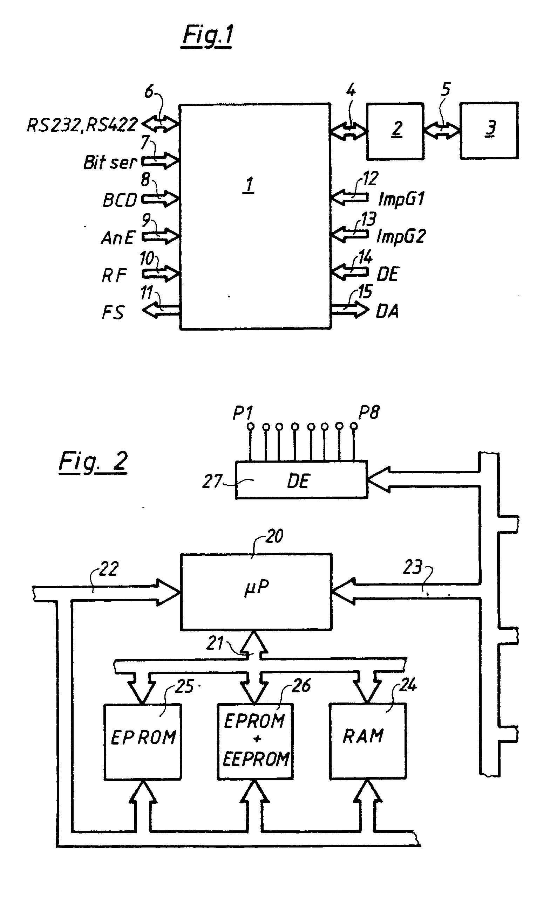

In Fig. 1 ist die erfindungsgemäß gestaltete Steuereinheit 1 schematisch mit einer Reihe von Ein-/Ausgängen dargestellt, sowie mit blockschaltmäßig angedeuteten Teilen, die den Transistorpulswechsel-Frequenzumrichter 2 und den vorzugsweise als Drehstrommotor verwendeten Asynchronmotor 3 betreffen. Die Steuereinheit 1 ist über eine Samelleitung 4 mit dem Frequenzumrichter 2 verbunden. Der Frequenzumrichter 2 selbst speist über Sammelleitungen 5 die Asynchronmaschine 3 und erhält über genannte Sammelleitung 5 Rückmeldesignale von dem Asynchronmotor 3.

Im dargestellten Beispiel der Fig. 1 ist die Steuereinheit mit zehn verschiedenen Ein- und Ausgängen 6 - 15 dargestellt. Anschließend soll auf die Funktion dieser Anschlüsse, die teilweise einzelne Geräte und elektrische Schaltkreise darstellen, eingegangen werden. Solche Ein- und Ausgänge werden üblicherweise auch gerätetechnische oder nur Schnittstellen genannt.

Der mit 6 bezeichnete Ein-/Ausgang stellt eine serielle asynchrone Schnittstelle dar, die nach dem EIA-Standard RS 232 oder RS 422 betrieben wird. Dabei beträgt die maximale Übertragungsrate 100 000 Baud (Bit/s). Das Format sieht ein Start-Bit, acht Daten-Bits, ein Parity-Bit und ein Stop-Bit vor. Die Befehle sind im ASCII-Format und die Daten sind binär codiert. Beispielsweise ist dabei das siebte Daten-Bit zur Angabe bestimmt, ob es sich um Daten oder Befehle handelt, die übertragen werden. Ist das Daten-Bit eine Eins, so handelt es sich um übertragene Daten, ist das Bit Null gesetzt, dann handelt es sich um Befehle. Weiterhin kann das Daten-Bit 6 dazu benutzt werden, um mit seinem Zustand, Null oder Eins, das Vorzeichen bei Daten anzugeben. Der Anschluß der seriellen asynchronen Schnittstelle kann vorteilhafter Weise über einen 15-poligen Steckverbinder erfolgen.

Mit 7 ist die bitserielle Schnittstelle bezeichnet, mit der der Steuereinheit mit einer maximalen Übertragungsrate von 500 kHz Informationen zugeführt werden können. Dabei ist eine symmetrische Übertragung zweier Signale für positive und negative Zählrichtung vorgesehen. Vorteilhafterweise wird ein Signalpegel von 5 Volt verwendet.

Der Eingang 8 ist die BCD-Schnittstelle zur Übertragung von binär codierten Dezimalwerten. Damit ist eine asymmetrische Datenübertragung über vier Datenleitungen und zwei Steuerleitungen möglich, wobei ein Pegel von 5 bzw. 15 Volt benutzt wird. Eingang 9 ist ein Analogeingang, der mit einem Eingangspegel von +/-10 V betrieben wird. Abhängig von der übrigen Konfiguration können hier weitere Eingänge verfügbar sein. Man kann auch Eingänge unterschiedlicher Genauigkeit hier vorsehen.

Der Eingang 10 stellt die Reglerfreigabe dar und kann mit einem Signalpegel von 5 bzw. 15 Volt aktiviert werden oder von 12 bzw. 24 Volt über Optokoppler betrieben werden.

Ausgang 11 gibt z.B. mit einem Signalpegel von 15 Volt oder als Relaisausgang ein Fehlersignal ab, um nach außen über den Fehlerzustand der Steuereinheit 1 zu informieren.

Ein weiterer sehr wesentlicher Eingang ist Eingang 12, der von einem Impulsgeber 1 beaufschlagt wird. Dieser Eingang kann beispielsweise zwei um 90° elektrisch versetzte, symmetrische Sinussignale mit einer Amplitude bis zu 10 Volt und einer Maximalfrequenz von 50 kHz verarbeiten. Dieser Impulsgebereingang 1 wird beispielsweise gespeist von einem auf der Rotorwelle des Asynchronmotors 3 sitzenden Impulsgeber zur Feststellung der Winkelposition des Rotors und auch zur Feststellung der Geschwindigkeit des Rotors. Wobei allerdings darauf hinzuweisen ist, daß die Information über die Geschwindigkeit erst aus der Auswertung der Impulsrate pro Zeiteinheit gewonnen wird.

Der Eingang 13 ist der Impulsgebereingang 2, der beispielsweise zwei um 90° elektrisch versetzte rechteckförmige Impulsreihen mit einem Signalpegel von 5 Volt verarbeiten kann. Hier beträgt die Maximalfrequenz beispielsweise 200 kHz. Bei einem sinusförmigen Impulsgeber, wie er beispielsweise über den Impulsgebereingang 1 angeschlossen werden kann, kann man wie gesagt in Kombination mit vorliegender Steuereinheit 1 bei relativ niedrigen Impulszahlen aus dem sinusförmigen Verlauf weitere Lage- bzw. Geschwindigkeitsinformationen entnehmen. Bei hohen Drehzahlen ergeben sich dann höhere Impulszahlen, jedoch wesentlich niedrigere als üblicherweise bei Rechteckimpulsgebern, so daß man auch bei hohen Drehzahlen mit dem Sinusimpulsgeber mit dieser Impulszahl technisch gesehen zurecht kommt. Denn es ist klar, wenn zu hohe Impulszahlen vorliegen, insbesondere wenn man in einem gestörten oder störanfälligen Umfeld arbeitet, können unter Umständen hohe Impulszahlen von Rechteckimpulsgebern nicht mehr verwendet werden. Dies ist insbesondere dann der Fall und von Bedeutung, wenn Drehzahlen bis zu 20 000 oder gar 30 000 Umdrehungen pro Minute gefordert sind. Generell gesehen kann also der Sinusverlauf beim Sinusimpulsgeber Informationen durch die Amplitudenauswertung und die Nulldurchgangsauswertung liefern.

Der mit 14 bezeichnete Eingang stellt digitale Eingänge dar, die entweder direkt oder über Optokoppler mit einem Pegel von 12 bzw. 24 Volt angeschlossen werden können. Der andere Signalpegel kann beispielsweise 5 bzw. 15 Volt betragen. Solche digitalen Eingänge werden beispielsweise verwendet als Eingänge zur Erfassung von absolut codierten Positionsmeßsystem mit Busstruktur, als Steuereingänge und als Überwachungseingänge.

Der mit 15 bzeichnete Ausgang der Steuereinheit 1 stellt digitale Ausgänge dar. Diese können offene Kollektorausgänge von einem Pegel bis 15 Volt sein, sie können auch über Relais geführt werden. Die Verwendung dieser Ausgänge dient beispielsweise zur Maschinensteuerung, zur Statusanzeige, zur Steuerung und Adressierung der Erfassung von Meßwerten absoluter Positionsmeßsysteme mit Busstruktur.

Die erfindungsgemäß gestaltete Steuereinheit ist mit einem Mikrorechner versehen, in dem ein Ablaufprogramm für verschiedene Antriebskonfigurationen enthalten ist. Dieses Ablaufprogramm enthält Teile, die es erlauben, den Rotorfluß und das Motormoment als lineare Steuergrößen wie bei Gleichstrommaschinen zugänglich zu machen, obwohl die regelungstechnische Struktur der Asynchronmaschine nicht linear ist. Dazu ist das Ablaufprogramm generell derart gestaltet, daß es die verschiedensten Konfigurationen für einen Frequenzumrichtergespeisten Asynchronmotorantrieb berücksichtigt. Es ist also somit einmal ein möglichst alle bzw. die am meisten vorkommenden Antriebskonfigurationen berücksichtigendes Ablaufsteuerprogramm erstellt worden, welches im Speicher des Mikrorechners abgespeichert ist. Da man jedoch bei den einzelnen Antriebskonfigurationen nicht alle Teile dieses Programms benötigt, welches man als modular aufgebaut sich vorstellen kann, werden diejenigen Teile des Programms, welche bei der jeweiligen Antriebskonfiguration benötigt werden, durch Aufruf von außen aktiviert.

Anhand der schematischen Darstellung der Fig. 2 werden die dazu im wesentlichen notwendigen Teile schematisch dargestellt. Fig. 2 stellt also einen Teil der Steuereinheit 1 dar, wobei auf einzelne Steuerleitungen und untergeordnete aber nicht weniger notwendige Teile der Darstellung verzichtet ist.

Der Mikrorechner der Steuereinheit 1 umfaßt einen Mikroprozessor 20. Dieser Mikroprozessor 20 ist über eine Adressen-Sammelleitung 21 mit verschiedenen Speicherteilen des Mikrorechners verbunden. Weiterhin führt zu den verschiedenen Speicherteilen des Mikrorechners eine Daten-Sammelleitung 22. Darüberhinaus ist der Mikroprozessor 20 mit einer weiteren Sammelleitung 23 verbunden, über die Daten- und Informationsaustausch mit Ein-/Ausgabeschnittstellen stattfindet. Gezeigt ist nur die mit 27 dargestellte digitale Eingabeschnittstelle, welche mit Eingängen P1 bis PB versehen ist. Die Daten-Sammelleitung 22 sowie die Adress-Sammelleitung 21 steht ebenfalls noch mit weiteren, in der Fig. 2 nicht dargestellten, Teilen der Steuereinheit 1 in Verbindung. Diese Teile erscheinen jedoch zur Erläuterung der Erfindung entbehrlich.

Die mit dem Mikroprozessor 20 zusammenarbeitenden Speicherteile sind zum einen der RAM-Speicherteil 24, der ein wahlfreier Zugriffsspeicher für den Mikroprozessor 20 ist. Weiterhin ist der Mikroprozessor 20 über die Sammelleitungen 21 und 22 mit einem EPROM-Speicherteil 25 verbunden, der als löschbarer Programm-Lesespeicher dient. Ein weiterer kombinierter EPROM + EEPROM-Speicherteil 26 ist ebenfalls über die Sammelleitungen 21 und 22 mit dem Mikroprozessor 20 verbunden. Dieser Speicherteil ist ein kombinierter löschbarer Programm-Lesespeicher und elektrisch löschbarer Programm-Lesespeicher. Dabei wird im letzteren mittels die von außen erfolgende Aufruf-Konfiguration abgespeichert.

Das einmal erstellte umfängliche Programm, das verschiedenste Funktionen im Sinne einer Multifunktionsausrüstung bei allen möglichen Antriebsarten und Antriebskonfigurationen sowie Steuerungs- und Regelungsanforderungsprofile berücksichtigt, ist im wesentlichen in den Speicherteilen 25 und 26 enthalten. Darüberhinaus wird über die digitale Eingabe 27, die Programmeingänge P1 bis P8 enthält, und die Sammelleitung 23, den Mikroprozessor 20 selbst sowie die Adress-Sammelleitung 21 und die Daten-Sammelleitung 22 in den Speicherteil 26, dort insbesondere in den elektrisch löschbaren Programm-Lesespeicher, diejenige Information eingestellt, die zum Aufrufen, d.h. zum Aktivieren, der jeweils benötigten und ausgewählten Konfiguration erforderlich ist. Somit sind über die Eingabe an der digitalen Eingabe 27 verschiedene mögliche Konfigurationen einstellbar, so daß eine einzige Steuereinheit 1 verschiedenste Aufgaben in der Praxis erfüllen kann. Selbstverständlich ist dabei vorausgesetzt, daß in dem abgespeicherten Ablaufprogramm derartige Konfigurationen vorherbedacht worden sind. Generell hat diese Art den erheblichen Vorteil, daß eine einzige Steuereinheit universell anwendbar ist, ja sogar vom Anwender selbst vor Ort je nach Wunsch und Möglichkeiten den Anforderungen entsprechend konfiguriert werden kann.

Bei der Erstellung des Ablaufprogramms ist das Erkennen verschiedener Anwendungen wesentlich. Beispielsweise kann zur Herstellung des Synchronlaufs zweier Motoren der eine Impulsgebereingang, beispielsweise Impulsgebereingang 12, intern per Programm als Sollwerteingang geschaltet werden, während der andere Eingang, beispielsweise Eingang 13 für den Impulsgeber 2, derjenige Eingang ist, der in Drehzahl und Lage den Führungsmotor führt. Insofern ist hier vorhersehbar die Anwendung von Steuerungen in Kaskaden, wobei mehrere Motoren, die hintereinander geschaltet sind, durch Kombination mehrerer Steuereinheiten betrieben werden können. Dies ist beispielsweise dann von Interesse, wenn in der Glasindustrie bei der Herstellung von Hohlglas oder in der Verpackungsindustrie bei der Herstellung von Konservendosen eine ganze Kette von Motoren in bestimmten synchronen Zyklen oder in bestimmter Weise verhältnissynchron laufen müssen.

Desweiteren ist bei der Erstellung des Ablaufprogramms an die Nachbildung einer Schrittschaltmotorsteuerung zu denken. Darüberhinaus kann daran gedacht werden, daß zwei Motoren leistungselektronisch von ein und demselben Steuergerät versorgt werden, wobei jedoch vorausgesetzt ist, daß immer nur ein System in Eingriff ist. Dabei werden von der einen verwendeten Speichereinheit jedoch die Lage- und Istwerte des einen gerade nicht betriebenen Motors gespeichert. Beide Systeme werden somit alternierend geführt, ohne daß dabei notwendige Information verloren geht. Ein Beispiel für eine derartige Anwendung ist beispielsweise bei einem Revolverschaltantrieb und bei dem Antrieb für das rotierende Werkzeug bzw. Werkstück gegeben.

Desweiteren kann in der Gestaltung des Ablaufprogramms berücksichtigt werden, daß die Steuereinheit als Basissystem für Handhabungssysteme verwendet wird, bei der von Asynchronmotoren die verschiedenen Achsen des Systems betrieben werden, jeweils jedoch nur eine der Achsen gerade angetrieben wird. Die Ortsfunktionen der einzelnen Achsen werden jedoch über die Eingänge berücksichtigt. Auch ist bei der Gestaltung des Ablaufprogramms an die Anwendung bei numerisch gesteuerten Werkzeugmaschinen zu denken, wobei dabei verschiedene Streckenprofile und verschiedene Drehzahlprofile in Abhängigkeit von der Zeit bei der Gestaltung des Programms berücksichtigt werden. Insbesondere bei derartigen Anwendungen können neben den zwei vorgesehenen Impulsgebereingängen 12, 13 noch weitere zusätzliche Impulsgebereingänge vorgesehen werden, die von entsprechend mehr Motoren gespeist werden. Alle von den Gebern geführten Informationen, die zur Steuerung und Führung der einzelnen Motoren notwendig sind, werden gespeichert. Sie bleiben somit erhalten und werden anschließend wieder verwendet, wenn inzwischen ein zweiter, dritter etc. Motor von der Steuereinheit alternierend betrieben wurde.

Ist ein derartiges Programm einmal erstellt, dann steht auch fest, welche einzelnen Anwendungen möglich sind, d.h. welche Antriebskonfigurationen in der Praxis vom Anwender konfigurierbar sind. Somit wird ein Verzeichnis all der Möglichkeiten erstellt, aus denen dann über entsprechende Aktivierung von einzelnen zugeordneten Steuer- bzw. Auswahl-Bits an den Programmeingängen P1 bis P8 über die digitale Eingabe 27, vgl. dazu Fig. 2, die entsprechenden zugeordneten Programmteile aufgerufen und aktiviert werden. Diese Aktivierung geschieht wie gesagt dadurch, daß elektrisch löschbar im Speicherteil 26 die jeweilige Konfiguration eingeschrieben wird. Damit erhält die Steuereinheit 1 insgesamt eine geänderte Funktionsweise.

Wie aus dem Vorstehenden ersichtlich, hängt die Anwendungsbreite der Steuereinheit davon ab, mit wieviel Umsicht und Aufwand anfänglich alle möglichen Antriebskonfigurationen bedacht und entsprechend berücksichtigt sind. Jedoch ergibt sich der unschätzbare Vorteil unmittelbar daraus, daß mit einfachen Mitteln praxisbezogen und in der Praxis einfach die Steuereinheit für neue Aufgaben herzurichten ist. Dies bietet eine enorme Flexibilität bei geringer Lagerhaltung von Steuereinheiten.

**Patentansprüche**

1.    Antriebseinrichtung, mit einem Drehstrommotor (3) und mit einer Steuereinheit (1), die mit einem Mikrorechner versehen ist, in welchem ein Ablaufprogramm mit Drehzahlregelung gespeichert ist und Teile des Ablaufprogramms durch Aufruf von außen aktivierbar sind, **dadurch gekennzeichnet,** daß das Ablaufprogramm zusätzlich zur Drehzahlregelung eine Momentenregelung und/oder eine Lageregelung, insbesondere Rotorpositionswinkelregelung oder Positionsregelung mit zusätzlichen digitalen Meßsystemen, und/oder eine Sollwerterzeugung für Positionierzyklen, insbesondere eine einachsige Positioniersteuerung, und/oder eine Sollwerterzeugung für zeitabhängige Drehzahlprofile und/oder eine wegabhängige und/oder zeitabhängige Steuerung von binären Ein-/Ausgängen und/oder eine Synchronregelung, auch mit variablem Drehzahlverhältnis, enthält und daß je nach Anwendung der Antriebseinrichtung diese verschiedenen Programmteile des Ablaufprogramms durch entsprechende Auswahl mittels Parametrisierung von außen aktivierbar sind.

2. Antriebseinrichtung nach Anspruch 1, **dadurch gekennzeichnet,** daß der Drehstrommotor (3) von einem Frequenzumrichter (2) gespeist ist und das Ablaufprogramm die Sollwerte für die Phasenspannung oder den Phasenstrom des Frequenzumrichters (2) für die Führung des Drehstrommotors (3) erzeugt.

3. Antriebseinrichtung nach Anspruch 2, **dadurch gekennzeichnet,** daß die Steuereinheit (1) Ein-/Ausgänge zum Anschluß des Frequenzumrichters (2) aufweist.

4. Antriebseinrichtung nach einem der Ansprüche 1 - 3, **gekennzeichnet durch** folgende Geräteschnittstellen der Steuereinheit (1) zur Kopplung mit übergeordneten Steuersystemen oder Bediengeräten:
   a) ein digital-serieller RS 232 oder RS 422 Ein-/Ausgangsteil (6),
   b) eine bit-serielle Eingangsschnittstelle (7),
   c) eine BCD-Eingangsschnittstelle (8),
   d) mindestens zwei Impulsgeber-Eingabeschnittstellen (12, 13), sowie
   e) binäre digitale Ein-/Ausgänge.

5. Antriebseinrichtung nach einem der Ansprüche 1 - 4, **dadurch gekennzeichnet,** daß der Mikrorechner einen Mikroprozessor (20) und im wesentlichen einen RAM-Speicherteil (24) als wahlfreien Zugriffsspeicher, einen EPROM-Speicherteil (25) als löschbaren Programm-Lesespeicher sowie einen kombinierten EPROM + EEPROM-Speicherteil (26) als löschbaren Programm-Lesespeicher und elektrisch löschbaren Programm-Lesespeicher enthält, wobei in letzterem (26) die von außen (27) erfolgende Parametrisierung abspeicherbar ist.

6. Antriebseinrichtung nach einem der Ansprüche 1 - 5, **dadurch gekennzeichnet,** daß mittels einer einzigen Steuereinheit (1) alternierend mindestens zwei Drehstrommotoren (3) steuerbar sind, wobei jedem Drehstrommotor (3) ein Impulsgebereingang (12, 13) fest zugeordnet ist.

7. Antriebseinrichtung nach einem der Ansprüche 1 - 6, **gekennzeichnet durch** zwei oder mehrere Drehstrommotoren und eine oder mehrere zugeordnete Steuereinheiten (1), wobei mindestens eine für Synchronregelung parametrisiert ist und wobei die Istwert-Impulse des einen Drehstrommotors die Sollwert-Impulse des jeweils nachgeordneten Motors bilden.

8. Antriebseinrichtung nach einem der Ansprüche 1 - 7, **gekennzeichnet durch** die Anwendung bei ein- und mehrachsigen, von Drehstrommotoren (3) betriebenen Handhabungssystemen.

9. Antriebseinrichtung nach einem der Ansprüche 1 - 8, **dadurch gekennzeichnet,** daß als Drehstrommotor (3) ein Asynchronmotor vorgesehen ist.

## Claims

1. A driving apparatus with a polyphase current motor (3) and with a control unit (1) provided with a microcomputer in which is stored a programme incorporating regulation of rotary speed and in which parts of the programme can be externally activated by being called up, characterised in that in addition to the rotary speed regulation, the programme includes momental regulation and/or positional regulation, particularly regulation of the rotor position angle or positional regulation with additional digital measuring systems and/or desired value generation for positioning cycles, particularly a monoaxial positioning control and/or a desired value generating arrangement for time-dependent rotary speed profiles and/or a path-dependent and/or time-dependent control of binary inputs/outputs and/or a synchronous control, also with a variable rotary speed ratio and in that according to the application of the driving apparatus, these various programme parts of the programme can be externally activated by an appropriate selection employing the use of parameters.

2. A driving apparatus according to Claim 1, characterised in that the polyphase current motor (3) is supplied by a frequency convertor (2) and in that the programme generates the desired values for the phase voltage or the phase current of the frequency convertor (2) in order to govern the polyphase current motor (3).

3. A driving apparatus according to Claim 2, characterised in that the control unit (1) has inputs/outputs for the connection of the frequency convertor (2).

4. A driving apparatus according to one of Claims 1 to 3, characterised by the following appliance interfaces of the control unit (1) adapted to be coupled to superior control systems or operating appliances:

a) a digital-serial RS 232 or RS 422 input/output part (6),

b) a bit-serial input interface (7),

c) a BCD input interface (8),

d) at least two pulse generator input interfaces (12, 13) and

e) binary digital inputs/outputs.

5. A driving apparatus according to one of Claims 1 to 4, characterised in that the microcomputer comprises a microprocessor (20) and substantially one RAM memory part (24) as a random access memory, an EPROM memory part (25) as an erasable programme reading memory as well as a combined EPROM + EEPROM memory part (26) as an erasable programme reading memory and electrically erasable programme reading memory, whereby the external (27) application of parameters being capable of being stored in this latter (26).

6. A driving apparatus according to one of Claims 1 to 5, characterised in that it is possible by means of a single control unit (1) to control at least two polyphase current motors (3) in an alternating arrangement, a pulse transmitter input (12, 13) being rigidly associated with each polyphase current motor (3).

7. A driving apparatus according to one of Claims 1 to 6, characterised by two or a plurality of polyphase current motors and one or a plurality of associated control units (1) at least one being parametrised for synchronous regulation, the actual value pulses of one polyphase current motor constituting the desired value pulses of whichever is the motor on the downstream side.

8. A driving apparatus according to one of Claims 1 to 7, characterised by its being used in the case of single and multi-axial handling systems operated by polyphase current motors (3).

9. A driving apparatus according to one of Claims 1 to 8, characterised in that an asynchronous motor is provided as the polyphase current motor (3).

## Revendications

1. Dispositif d'entraînement, comprenant un moteur triphasé (3) et une unité de commande (1) munie d'un microordinateur dans lequel est stocké un programme d'exécution avec réglage de la vitesse de rotation et qui permet, par appel de l'extérieur, d'activer des parties du programme d'exécution, **caractérisé en ce** que le programme d'exécution comprend, en plus du réglage de la vitesse de rotation, un réglage du couple du moteur et/ou un réglage de position, en particulier un réglage de la position angulaire du rotor ou un réglage de position avec des systèmes de mesure numérique supplémentaires, et/ou une génération de valeurs de consigne pour des cycles de positionnement, en particulier une commande de positionnement uniaxe, et/ou une génération de valeurs de consigne pour des profils de vitesse de rotation en fonction du temps et/ou une commande en fonction de la distance et/ou du temps des entrées/sorties binaires et/ou un réglage synchrone, même avec un rapport de vitesses variable; et que, selon l'application du dispositif d'entraînement, ces différents segments de programme du programme d'exécution peuvent être activés par l'extérieur par une sélection correspondante au moyen d'un paramétrage.

2. Dispositif d'entraînement selon la revendication 1, caractérisé en ce que le moteur triphasé (3) est alimenté à partir d'un convertisseur de fréquence (2) et que le programme d'exécution génère les valeurs de consigne pour la tension de phase ou le courant de phase du convertisseur de fréquence (2) pour la conduite du moteur triphasé (3).

3. Dispositif d'entraînement selon la revendication 2, caractérisé en ce que l'unité de commande (1) comprend des entrées/sorties pour le branchement du convertisseur de fréquence (2).

4. Dispositif d'entraînement selon l'une des revendications 1 à 3, caractérisé en ce qu'il comprend les interfaces instrumentales suivantes de l'unité de commande (1) pour le couplage avec des systèmes de commande supérieurs ou des appareils de commande :

a) une entrée/sortie série numérique RS 232 ou RS 422 (6),

b) une interface d'entrée en série par bit (7),

c) une interface d'entrée BCD (8),

d) au moins deux interfaces d'entrée de générateur d'impulsions (12, 13), ainsi que

e) des entrées/sorties numériques binaires.

5. Dispositif d'entraînement selon l'une des revendications 1 à 4, caractérisé en ce que le micro-ordinateur comprend un microprocesseur (20) et fondamentalement une mémoire RAM (24) comme mémoire à accès direct, une mémoire EPROM (25) comme mémoire de lecture de programme effaçable ainsi qu'une mémoire EPROM + EEPROM combinée (26) comme mémoire de lecture de programme électriquement effaçable, dans cette dernière (26) pouvant être stocké le paramétrage effectué par l'extérieur (27).

6. Dispositif d'entraînement selon l'une des revendications 1 à 5, caractérisé en ce qu'une seule unité de commande (1) permet de commander alternativement au moins deux moteurs triphasés (3) à chaque moteur triphasé (3) étant associée de manière fixe une entrée de générateur d'impulsions (12, 13).

7. Dispositif d'entraînement selon l'une des revendications 1 à 6, caractérisé en ce qu'il comprend deux moteurs triphasés ou plus et une ou plusieurs unités de commande (1), au moins l'une de celles-ci étant paramétrée pour un réglage synchrone et les impulsions de valeur effective de l'un des moteurs triphasés constituant les impulsions de valeur de consigne du moteur monté respectivement en aval.

8. Dispositif d'entraînement selon l'une des revendications 1 à 7, caractérisé par l'utilisation pour des systèmes de manipulation à un ou plusieurs axes entraînés par des moteurs triphasés (3).

9. Dispositif d'entraînement selon l'une des revendications 1 à 8, caractérisé en ce qu'un moteur asynchrone est prévu comme moteur triphasé (3).

## Fig.1

## Fig. 2